(19) Europäisches Patentamt
European Patent Office
Office européen des brevets

(11) Publication number: 0 230 757
B1

(12) # EUROPEAN PATENT SPECIFICATION

(45) Date of publication of the patent specification: 13.09.89

(51) Int. Cl.⁴: C 01 B 17/66

(21) Application number: 86309858.8

(22) Date of filling: 17.12.86

(54) **Process and apparatus for the production of sodium hydrosulfite.**

(30) Priority: 03.01.86 GB 8600061
30.07.86 GB 8618577

(43) Date of publication of application:
05.08.87 Bulletin 87/32

(45) Publication of the grant of the patent:
13.09.89 Bulletin 89/37

(84) Designated Contracting States:
AT BE CH DE ES FR GB GR IT LI NL SE

(56) References cited:
FR-A-1 189 764
US-A-3 226 185

(73) Proprietor: MORTON THIOKOL, INC., 110 North Wacker Drive, Chicago Illinois 60606- 1560 (US)

(72) Inventor: Sanglet, Phillippe R., Lange Violette Straat 114, B-9600 Gent (BE)

(74) Representative: Bankes, Stephen Charles Digby, BARON & WARREN 18 South End Kensington, London W8 5BU (GB)

EP 0 230 757 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1989

## Description

This invention relates to an improved process and apparatus for producing sodium hydrosulfite.

Sodium hydrosulfite, $Na_2S_2O_4$, also known as sodium dithionite, is extensively used as a bleaching agent in the paper and textile industries, and has a wide range of other uses. Because it is relatively unstable, it is generally produced in situ at the point of use, for example in a pulp mill.

Methods used in the past for producing sodium hydrosulfite have included dissolving zinc in a solution of sodium bisulfite and precipitating the zinc-sodium sulfite with milk of lime to leave the hydrosulfite in solution, and reacting sodium formate with sodium hydroxide and sulfur dioxide.

More recently the present applicants have developed a process wherein caustic soda and sulfur dioxide are mixed with sodium borohydride in an aqueous medium to produce an aqueous solution of the hydrosulfite. The sodium borohydride generally enters the process in a mixture with aqueous sodium hydroxide. This mixture obtainable from the Ventron Division of Morton Thiokol Inc., under the registered Trade Mark BOROL, has good stability since acid hydrolysis of tho sodium borohydride is prevented. For convenience, this type of process will be referred to hereinafter as the Borol process.

The theoretical reaction of the Borol process, assuming ideal conditions and 100 % yield, would be as follows:

$$NaBH_4 + 8NaOH + 8SO_2 \rightarrow 4Na_2S_2O_4 + NaBO_2 + 6H_2O$$

There is however a side reaction in which the sodium borohydride is hydrolysed, thus reducing the overall efficiency of the reaction:

$$NaBH_4 + 2H_2O \xrightarrow{H^+} NaBO_2 + 4H_2O$$

This reaction is a function of pH, and increases with reduced pH. The problem cannot however be overcome simply by raising the pH since this would adversely affect the main reaction. The reaction effectively takes place in two stages, as follows:

(a) the reaction between sulfur dioxide and caustic soda to give sodium bisulfite (I) and
(b) the reaction between the bisulfite and sodium borohydride to give sodium hydrosulfite (II).

(I) $8NaOH + 8SO_2 \rightarrow 8NaHSO_3$

(II) $8NaHSO_3 + NaBH_4 \rightarrow 4Na_2S_2O_4 + NaBO_2 + 6H_2O$

There is also an equilibrium (III) between the bisulfite and sodium sulfite, which is a function of the pH:

(IIIa) $H_2O + HSO_3^- \overset{K_2}{\rightleftarrows} H_3O^+ + S{=}_2^{2-}$

(IIIb) $H_3O + HSO_3^- \overset{1/K_1}{\rightleftarrows} 2H_2O + SO_2\,(aq)$

$K_2 = 1.02 \times 10^{-7}$ (18°C)
$K_1 = 1.54 \times 10^{-2}$ (18°C)

Above pH 7, the bisulfite concentration is inversely proportional to pH. Below pH 2, the bisulfite concentration is directly proportional to pH. In the pH range 5 - 7, within which this type of process is generally operated, lowering the pH will favour the formation of bisulfite.

Consideration of this equilibrium therefore has to be weighed against that of acid hydrolysis discussed above to determine the optimum pH for the process. In the process used hitherto a pH of 6.5 has been found to give the best yield. Nevertheless, it has proved difficult to achieve yields greater than 85 %.

In the Borol process used hitherto, $SO_2$, water, sodium hydroxide and a sodium borohydride/sodium hydroxide/water mixture (Borol) are fed in that order into a flow line which leads to a static mixer and thence to a degassing tank where entrained gases are vented to the atmosphere.

An aqueous solution of sodium hydrosulfite is pumped from the degassing tank, part of this being delivered to a storage tank for use as required and the rest is recycled to the flow line at a position downstream of the $SO_2$, water and NaOH inlets but upstream of the Borol inlet. The input of each reactant can be controlled automatically in response to rising or falling levels in the degassing tank or the storage tank or changes in pressure, flow rates and/or pH.

The present applicants have sought to improve the yields of the above process by variation in proportions of chemicals, pH measurement and control and different addition methods.

According to one aspect of the invention, a process wherein sodium borohydride/sodium hydroxide/water mixture is reacted in aqueous solution with sulfur dioxide and sodium hydroxide and/or sodium bisulfite to

form sodium hydrosulfite by feeding the reactants to a constantly circulating reaction mixture from which hydrosulfite is drawn off is characterised in that downstream of the point at which the hydrosulfite is drawn off and upstream of the points at which the reactants enter the system the circulating reaction mixture is divided into two streams. The reactants other than the sodium borohydride mixture are fed into one of these streams which them rejoins the other to form a single stream to which the sodium borohydride/sodium hydroxide /water mixture is added.

The reactants other than the sodium borohydride mixture are preferably supplied to the system as sodium hydroxide, sulfur dioxide and water, but various reactant mixtures may be used which include sodium bisulfite, generally formed by pre-reacting a sulfur dioxide/water mixture with sodium hydroxide.

According to a further aspect of the invention, a process of the above type is characterised in that the sulfur dioxide is fed into the system at a point downstream of the point at which sodium hydroxide enters the system rather than upstream of it as in the process used hitherto. Preferably the $SO_2$ is mixed with the water before being fed into the reactant stream containing the sodium hydroxide.

The applicants have found that yields can be improved in processes of the above general type by any or all of the following:

i) carrying out the reaction at a pH in the range 5.5 - 6.5, preferably 5.7 - 6.2;
ii) carrying out the reaction at a temperature below 12°C; and
iii) adjusting the reactant concentrations to give a concentration of hydrosulfite at the draw off point of 9 - 12 wt.-%. Concentrations above this range may give rise to crystallisation of the hydrosulfite on storage.

According to a preferred feature of the invention the reactants are fed into the reactant stream through nozzles positioned centrally in the reactant stream and aligned in the direction of flow so that each reactant joins the stream at approximately the prevailing speed of flow to reduce turbulence. The improved "kinetic" mixing obtained in this way prevents or reduces sudden changes in the pH of the reaction mixture.

In the process of the invention, if sodium hydroxide and sulfur dioxide are fed to the system, reaction (1) takes place as outlined above, giving a mixture of sodium bisulfite and sulfur dioxide. This mixture preferably has an $SO_2$ concentration of 95 ot 120 $g.l^{-1}$ more preferably 100 to 115 $g.l^{-1}$. The ratio of bisulfite/$SO_2$ in the mixture is preferably in a range from 1 : 1.20 to 1 : 1.50, most preferably about 1 : 1.35. Alternatively, an aqueous mixture of sulfur dioxide and sodium bisulfite may be fed to the system, for example one of the solutions disclosed in EP-A-0 202 210.

The reaction mixture should normally be kept at a pressure of at least 300 kPa to keep the $SO_2$ liquid. The preferred pressure range is 300 to 350 kPa, but higher pressures may also be used.

The preferred reaction temperature is below 12°C, more preferably 7° to 10°C. It has been found that at such relatively low temperatures the loss of $NaBH_4$ through acid hydrolysis is substantially reduced. One possibility is that a relatively low temperature simply reduces the kinetic rate of borohydride hydrolysis. Whatever the actual mechanism, this reduction in hydrolysis in turn makes it possible to carry out reaction (II) at slightly lower pH than in the process used hitherto, for example 5.5 to 6.0. This favours the bisulfite in equilibrium (III), thus increasing the yield of the bisulfite/borohydride reaction (II).

A further possibility is that under such conditions of temperature and pressure at least a part of the sulfur dioxide may be in the form of a hexahydrate $SO_2 \cdot 6H_2O$, inhibiting to some extent direct contact between the strongly acid free $SO_2$ and the $NaBH_4$ which it encounters further downstream, and thus reducing the acid hydrolysis of the $NaBH_4$.

The sodium borohydride/sodium hydroxide/water mixture used in the process of the invention preferably comprises 10 - 15 wt.-% $NaBH_4$, 35 - 45 wt.-% NaOH and 40 - 60 wt.-% water. The Borol mixture of Morton Thiokol Inc., comprises 12 % $NaBH_4$,40 % NaOH and 48 % water.

According to a further aspect of the invention there is provided apparatus for the production of sodium hydrosulfite comprising a recycling loop including a static mixer provided with cooling means, a degassing tank downstream of the static mixer, a circulating pump and a draw-off point for sodium hydrosulfite, wherein downstream of the draw-off point the recycling loop is divided into first and second flow lines, the first flow line having one or more input points for water, sulfur dioxide and sodium hydroxide or sodium bisulfite, or mixtures thereof, the second flow line rejoining the first downstream of said input points.

Preferred embodiments of the invention will now be described with reference to the accompanying drawings wherein:

Figure 1 is a simplified flow diagram illustrating the prior art process described above;
Figure 2 shows diagrammatically a process in accordance with a first embodiment of the present invention;
Figure 3 shows diagrammatically a system in accordance with a second embodiment of the invention;
Figure 4 shows a kinetic mixing nozzle used in the process of the present invention; and
Figure 5 is a water/$SO_2$ phase diagram showing the concentrations and conditions under which the $SO_2$ forms a hydrate.

Referring first to Figure 1, a flow line 12 is fed with liquid sulfur dioxide from a tank 10, water from a supply line 14, sodium hydroxide from a storage tank 15 and a sodium borohydride/sodium hydroxide/water mixture (referred to hereinafter as Borol) from a storage tank 16. When the sodium hydroxide joins the flow line 12, reaction (I) referred to above takes place to generate sodium bisulfite. When the Borol mixture joins the

system further downstream, the reaction (II) starts to take place to generate sodium hydrosulfite. The reaction mixture is fed to a static mixer 18 and thence to a degassing tank 19 from which gaseous products such as hydrogen are vented from the system to the atmosphere through a vent pipe 20.

A flow line 22 leads from the bottom of the degassing tank 19, the sodium hydrosulfite solution from the degassing tank being circulated through this flow line by a pump 24. Downstream of the pump the flow line is divided into a first line 26 leading to a hydrosulfite storage tank 28 and a second line 32, which recycles a proportion of the hydrosulfite solution to the flow line 12, downstream of the sodium hydroxide input but upstream of the Borol input. A minor proportion of the solution from flow line 32 is drawn off along a flow line 30 and recirculated directly to the degassing tank 19.

A pulp mill or the like is fed with sodium hydrosulfite directly from the storage tank 28. As hydrosulfite solution is drawn off from this tank, the fall in level is sensed by a level transmitter (LT) 34 which sends an electrical signal to a level indicator control (LIC) 36 which in turn transmits a signal to a flow indicator control (FIC) 37 which in turn operates a current/pressure transducer (I/P) 38 which operates a pressure valve 40 to increase the flow of water to the system.

The flow of water through the input line 14 is sensed by a magmeter flow meter (MM) which sends a signal to the FIC 37 to regulate the flow, and also to a flow ratio indicator control (FRIC) 44 which controls the supply of Borol via an I/P transducer 46 which operates a pressure valve 48. The flow of Borol mixture is sensed by a magnetic flow meter 50 which sends a signal to the FRIC 44 and to an FRIC 52 which controls the input of NaOH via an I/P transducer 54 and pressure valve 56. The flow of NaOH into the system is also monitored by a magnetic flow meter 58 which sends a flow measurement signal back to the FRIC 52.

The various control functions 36, 37 etc., are shown for simplicity in Figure 1 as individual microprocessor functions. In practice of course all these functions are likely to be performed by a single central process computer.

The input of $SO_2$ to the system is controlled as a function of the pH in the recirculating reaction mixture. The pH of the solution in the branch pipe 30 is monitored by a pH electrode (pHE) 60 which sends a signal to a pH indicator control (pHIC) 62 which controls the input of $SO_2$ by means of an I/P transducer 64 and a pressure valve 66. As mentioned above, this prior art process is generally operated at a pH of about 6.5. if the monitored pH rises above the predetermined value, the pHIC 62 will act to increase the flow of $SO_2$ and similarly if the pH falls the input of $SO_2$ will be reduced.

If the level in the degassing tank 19 falls below a predetermined level, a level transmitter 70 will send a signal to a level indicator control 72 to reduce the flow of hydrosulfite through flow line 26 to storage tank 28, by means of an I/P transducer 74 and pressure valve 76.

Using a Borol solution having the composition specified above, in which the molar ratio of NaOH to $NaBH_4$ is 3.2 : 1, the overall equation for reactions (I) and (II) above becomes:

$$\underbrace{NaBH_4 + 3.2\ NaOH}_{BOROL} + 4.8\ NaOH + 8SO_2 \rightarrow 4Na_2S_2O_4 + NaBO_2 + 6H_2O$$

On this basis, assuming an overall reaction efficiency for the above prior art process of 85 %, the actual quantity of each reactant required to produce one kilogram of 100 % active sodium hydrosulfite is shown to be:

0.533 kg Borol mixture
0.325 kg NaOH (based on 100 %) and
0.865 kg $SO_2$

The amount of water depends on the desired concentration of the final hydrosulfite solution, which is usually 2 to 6 wt.-%.

Referring to Figure 2 of the drawings, certain features which are essentially identical to those shown in Figure 1 are given the same reference numerals. As in the embodiment of Figure 1, the sodium hydroxide, water and sulfur dioxide are mixed to initiate the production of sodium bisulfite and Borol mixture is then added, the reaction mixture being passed through a static mixer 18 and thence to a degassing tank 19. The mixture entering the static mixer is preferably at a temperature of about 10°C. The static mixer 18 has a water cooling jacket 17, whereby the temperature of the reaction mixture is reduced to about 8°C. Again, the flow of sodium hydrosulfite solution from the degassing tank to storage is controlled by level transmitter 70, LIC 72, I/P transducer 74 and pressure valve 76. There is also provided a control valve 89 and a magnetic flow tube (MFT) 77 so that the flow rate of hydrosulfite to storage can be monitored.

The concentration of the hydrosulfite leaving the recycle stream is generally in the range of 9 - 12 wt.-%. Increased yields can be obtained by operating the process at this relatively high concentration, but storage stability is reduced. If therefore the hydrosulfite is not to be used immediately it should be diluted down to a concentration of 4 - 5 wt.-%. For this purpose, water is supplied through a conduit 170, tapped off from the main water supply 114. The supply of diluting water to the hydrosulfite solution is controlled by a valve 171 operated by an I/P transducer 172 and a conductivity control microprocessor (CCD) 173 which monitors the concentration of the solution, downstream of the input of diluting water, by means of a conductivity cell 174.

The pump 24 for the recycled stream of hydrosulfite is in this embodiment positioned downstream of pH electrode 61, which controls the input of $SO_2$ as will be described below. Downstream of the pump 24, and of the point at which hydrosulfite is drawn off to storage, the solution passes through a heat exchanger 90,

another control valve 91 and a rotameter 92. The heat exchanger cools the reaction mixture from about 12°C, to which it has risen as a result of the exothermic reaction, to about 7°C. The flow line is then divided at a point 80 into first and second flow lines 82, 84. A manually-controlled valve 81 in flow line 84 controls the relative proportions of the flow passing through the two flow lines. Preferably 20 - 60 % of the flow, typically 40 %, passes through the first flow line 82 and 40 - 80 %, typically 60 %, through the second flow line 84.

Sodium hydroxide from supply tank 115 is fed into flow line 82 at a point 100. $SO_2$ from supply tank 110 joins the water supply line 114 at a position 102 and the resulting mixture is fed into the flow line 82 at a position 104, downstream of the NaOH input rather than upstream as in the previous Borol process. The reaction mixture then passes through a static mixer 98 and onto the main static mixer 18 where Borol mixture from the supply tank 16 is fed into the system. The second flow line 84 rejoins flow line 82 at a position 86 between the two static mixers 98, 18. The flow rate of the recirculating mixture entering static mixer 18 is monitored by a pressure indicator (PI) 94 which sends a signal to pressure indicator control (PIC) 95 which in turn feeds a signal to an I/P transducer 96 which operate a pressure valve 97 controlling the flow to the static mixer 18.

To reduce still further the change in pH as the $SO_2$ joins the recycle stream a proportion of the NaOH (suitably 10 - 50 % of the total NaOH flow and preferably 35 - 40 %) is fed through a bypass line 101 to the $SO_2$ input line, joining this line downstream of the position 102 at which the $SO_2$ joins the water flow. The flow through the bypass line is controlled by a valve 103, which may be operated automatically in response to monitored flow rates of water, NaOH and $SO_2$.

The hydrosulfite storage tank 28 of Figure 1 is not shown in Figure 2, but it will be understood that the system of Figure 2 may feed a storage tank in exactly the same way as in Figure 1.

A system of Figure 2 has a automatic control system operating in a similar way to that of Figure 1. Input signals S. which may correspond to level signals from a storage tank as in Figure 1, are fed to an FIC 137, which in turn sends signals to an I/P transducer 138 to operate a pressure valve 140 in the water feed line 114. The FIC 137 also receives the flow rate data from a magnetic flow tube (MFT) 142 in the water flow line, and transmits flow data to an FRIC 144 controls the supply of Borol mixture to the static mixer 18 by means of I/P transducer 146 and pressure valve 148 monitoring the flow rate by means of an MFT 150.

Flow rate data for water and the Borol mixture are also transmitted by the the FRIC 144 to an FRIC 152 and to a combined FRIC and pH indicator control 162 which control the input of sodium hydroxide and sulfur dioxide respectively. The FRIC 152 controls the input of NaOH by means of I/P transducer 154 and pressure valve 156 and monitors the input of NaOH by means of magnetic flow tube 158. The control unit 162 also receives pH data from a pH electrode 61, as well as from a micro-massmeter 160 which monitors the flow rate of $SO_2$. This flow rate is controlled by means of I/P transducer 164 and pressure valve 166.

The signals to the I/P transducer 164 from the control unit 162 are preferably determined to a much greater extent by the flow ratio data than by the pH data. Suitably the signals are based to an extent of 75 - 85 %, preferably about 80 %, on flow ratio data and 15 - 25 %, preferably about 20 %, on pH data.

By splitting the recycle stream at 80, a more balanced input of reactants is obtained since there is less difference in volume between the recycle stream and the reactants entering it. There is also a less drastic dilution of the reactants.

The systems shown in Figure 3 uses, instead of separate inputs of NaOH, $SO_2$ and water, a single input of an aqueous solution of sodium bisulfite and sulfur dioxide. In this Figure, components which are identical to those of Figure 2 are given the same reference numerals and will not be described in detail. The system is similar to that of Figure 2 insofar as it comprises a recycling system with a cooled static mixer 18, a degassing tank 19, a pump 24, a draw-off point and diluting system for the product, a heat exchanger 90 and a split stream comprising an input line 82 and a bypass line 84.

The input line 82 has a single input point 204 for an aqueous $SO_2/NaHSO_3$ solution from a supply 210. The flow of this solution is controlled by a valve 240 actuated by an I/P transducer 238 which in turn is controlled by an FRIC/pHIC 262. This unit receives signals from the pH electrode 61 as in the system of Figure 2, and also from a magnetic flow tube 242 monitoring the flow rate of the bisulfite/$SO_2$ solution and from an FIC 244 which monitors the flow of sodium borohydride solution to the system. This latter unit replaces the FRIC 144 of Figure 2 since it receives only the flow rate data from the magnetic flow tube 150. As in the system of Figure 2, the control unit 262 preferably controls the input of the bisulfite/$SO_2$ solution to an extent of about 80 % on the basis of flow ratio data and 20 % on the basis of pH data.

Figure 3 shows the way in which the various reactants are preferably fed to the system in accordance with the invention, at input points 100, 102 and 104. A similar system can be used to feed in the Borol mixture, rather than feeding it directly to the static mixer as shown in Figure 2. The main flow line is indicated by 180, the ingredient being added, such as the NaOH or the $SO_2$/water mixture, entering the system through a nozzle 182 positioned with its end substantially co-axial with the flow line. The nozzle is such that the flow rate of the reactant entering the system is substantially the same as that of the circulating reaction mixture in the flow line. This means that all of the reactant entering the system at this point is carried along by the circulating reaction mixture, without any of it adhering to the sides of the flow line around the entry point. This helps to ensure that a homogeneous mixture is obtained and that sudden changes in composition and, more especially, pH, are avoided.

Figure 5 is a phase diagram for a sulfur dioxide/water system as fed to the apparatus of the invention, the percentage content of $SO_2$ being plotted against temperature at a pressure of 500 kPa. Although the process of the present invention is normally operated at somewhat lower pressures such as 250 - 300 kPa the relevant

parts of the phase diagram will be essentially the same. It can be seen from this that at the temperatures and concentrations normally used in the process of the invention a part of the $SO_2$ is in the form of hydrate described above.

The system described above has been found to give substantially improved yields over those obtained with the previous Borol process, yields of 90 % and even 95 % and above being easily obtainable. Important factors in achieving this are thought to include the feeding of NaOH to the recycled upstream from the input of $SO_2$, avoiding any drastic pH drop, and the kinetic mixing obtained by the use of nozzles such as 182 to feed the reactants to the system, the ratios of $SO_2$/water and bisulfite/$SO_2$ and the relatively low temperature.

Taking into consideration that the system operates under a slight excess of bisulfite (typically a 10 - 15 % excess) the balanced equation (based on 90 % yield) can be transformed into:

$$NaBH_4 + 3.2\ NaOH + 2.6\ Na_2S_2O_5 + 3.5\ SO_2 \rightarrow 3.6\ Na_2S_2O_4 + H_3BO_3 + 1.77\ H_2O + 0.4\ H_2 + 0.4\ Na_2S_2O_5 + 7\ Na_2SO_3$$

Based on this equation the actual quantity of each material required to produce one kilogram of 100 % active hydrosulfite is shown to be:

0.503 kg Borol mixture
0.332 kg NaOH (at 100 %) and
0.889 kg $SO_2$

There are various different ways in which the percentage yield obtained by the process of the invention may be calculated. Three such methods which will be referred to herein are as follows:

**Per Cent Yield Based on Hydrogen and Borol Solution Flow**

If the relation between the Borol solution and bisulfite is quantitative no hydrogen is evolved. In fact some hydrogen evolution occurs due to undesired decomposition (hydrolysis) of the sodium borohydride in the Borol solution that does not react with bisulfite.

By measuring this hydrogen flow, relative to the Borol solution flow, the efficiency of the hydrosulfite generation reaction can be calculated.

**Per Cent Yield Based on Mass Balance**

This yield determination method is based on the stoichiometry of the balanced equation for conversion of the reactant feed chemicals to hydrosulfite product.

The actual yield of hydrosulfite is determined by the titration of the hydrosulfite concentration in the product solution. The per cent yield is then calculated by the ratio of actual hydrosulfite produced to that theoretically produced according to the stoichiometry of the balanced equation and the reactant chemical feed.

**Per Cent Yield Based on Boron Concentration in Borol Solution and in Hydrosulfite Product**

This per cent yield calculation method uses boron analysis to calculate the amount of sodium borohydride in the Borol solution reactant chemical feed that is actually consumed in the production of hydrosulfite product.

The boron in commercial Borol solutions is predominantly in the form of sodium borohydride, but a small quantity of boron is also present as sodium metaborate. This latter impurity is determined analytically by first analysing the Borol solution for sodium borohydride concentration and then determining total boron by atomic absorption or mannitol titration of hydrolysed sample. From the difference in these determinations, boron as metaborate is calculated.

Next, the hydrosulfite product is analysed for boron content. The boron contribution for metaborate due to this impurity in the Borol solution reactant is subtracted out and the remaining boron is attributed to sodium borohydride used in the stoichiometrically balanced equation to form hydrosulfite. From a titration of the product for actual hydrosulfite and the theoretical hydrosulfite possible (based on boron analysis), the per cent yield is calculated.

The process of the invention will be illustrated further by the following Examples:

**Example 1**

A system as depicted in Figure 2 is operated with the following fixed process parameters:

Reactant Feed Pressure (BAR):

| | |
|---|---|
| Borol Solution | 4.65 |
| NaOH | 4.58 |
| $SO_2$ | 5.92 |

Recycle Flow Rate ($M^3$/Hr): 20
Split Stream Ratio (Percent of feed stream diverted to chemical feed side): 20

Other operating parameters are varied as shown below and hydrosulfite yields are determined by using the previously mass balance method.

| | Sample Designation | | | | | |
|---|---|---|---|---|---|---|
| | A | B | C | D | E | F |
| Operating parameters: | | | | | | |
| Temperature (°C) | 9.5 | 9.5 | 9.4 | 7.3 | 9.4 | 11.4 |
| pH | 5.90 | 5.93 | 5.92 | 5.83 | 5.90 | 5.88 |
| Water Feed (L/min) | 16.4 | 10.0 | 16.4 | 9.4 | 15.6 | 22.8 |
| Hydrosulfite conc. (wt.-%) | 11.14 | 11.21 | 10.64 | 11.23 | 10.64 | 11.02 |
| Yield results: | | | | | | |
| Hydrosulfite Yield (wt.-%) | 98.0 | 96.9 | 93.7 | 93.3 | 90.2 | 96.8 |

**Example 2**

A system as depicted in Figure 2 is operated as shown in Example 1 and with various pH values and various ratios between the bisulfite/$SO_2$ (Generated by Reaction 1) and the Borol feed. Hydrosulfite yields are determined by the previously described mass balance method.

| Ratio $NaHSO_3/SO_2$ System to Borol Solution | pH | Hydrosulfite Yield |
|---|---|---|
| 28 | 5.6 | 97.4 |
| | 5.9 | 97.4 |
| | 6.0 | 95.1 |
| | 6.3 | 93.6 |
| 19 | 6.5 | 92.3 |
| | 6.6 | 90.7 |
| 15 | 6.9 | 87.1 |
| | 7.0 | 87.5 |

It can be seen from the above Table that greatly improved yields are obtained, even at the pH values used in the previous Borol process and system (Figure 1). At the lower pH values, such as the 5.5 to 6.0 preferred for the process of the invention, yields in excess of 95 % are obtained. The optimum pH for the process is considered to be 5.9.

**Example 3**

A system as depicted in Figure 2 is operated with the following process parameters:

| | |
|---|---|
| pH | 5.91 |
| Temperature (°C) | 9.8 |
| Recycle Flow Rate ($M^3$/Hr) | 12 - 20 |
| Split Stream Ratio (Percent of feed stream diverted to chemical feed side) | 40 |
| Caustic Injection (Percent of total caustic flow injected into the $SO_2$/water system) | 30 |

The hydrosulfite yield is determined by two previously described methods, the total boron method and the mass balance methods.

| Yield Determination Method | Hydrosulfite Conc. (wt.-%) | Hydrosulfite Yield (%) |
|---|---|---|
| Total boron | 11.57 | 95.1 |
| Mass balance | 10.17 | 94.0 |

**Example 4**

A system as depicted in Figure 3 is operated with the following process parameters:

| | |
|---|---|
| Temperature (°C) | 10 - 11 |
| pH | 5.6 - 5.8 |
| Recycle Flow Rate ($M^3$/Hr) | 25 - 30 |
| Hydrosulfite Conc. (wt.-%) | 12 |

The hydrosulfite yield is determined by three previously described methods: the hydrogen and Borol solution flow method; the mass balance method; and the total boron method.

| Yield Determination Method | Hydrosulfite Yield |
|---|---|
| Hydrogen and Borol solution flow | 96.3 |
| Mass balance | 95.4 |
| Total boron | 96.7 |

**Claims**

1. A process for producing sodium hydrosulfite by reacting sodium borohydride with sodium bisulfite, sodium hydroxide and sulfur dioxide in aqueous solution, wherein the reactants are fed to a continuously recirculating reaction mixture from which a sodium hydrosulfite solution is drawn off and wherein the sodium borohydride is fed to the system in the form of an aqueous mixture with sodium hydroxide, at a position downstream of the input (102, 104) of the other reactants and upstream of the position at which the sodium hydrosulfite is drawn off, characterised in that at a position (80) downstream of the position at which the hydrosulfite is drawn off and upstream of the input of the reactants the circulating reaction mixture is divided into first and second streams (82, 84), the reactants other than the said aqueous sodium borohydride mixture being fed into the first stream (82) and the first and second streams then being joined (86) to form a single stream into which the sodium borohydride mixture is fed.

2. A process according to claim 1, characterised in that sodium hydroxide is fed to the first stream (82) and at least a part of it enters the stream at a position (100) upstream of the input of the other reactants.

3. A process according to claim 1 or claim 2, characterised in that sulfur dioxide is fed into a water supply line (114) which leads into the first stream (82).

4. A process according to claim 3, characterised in that a part of the sodium hydroxide is fed to the first stream (82) at a position (100) upstream of the position (104) at which the sulfur dioxide/water mixture enters the system and the rest is fed to the water supply line (114) and mixed with the sulfur dioxide/water mixture therein.

5. A process according to claim 4, characterised in that 10 to 50 % of the total sodium hydroxide supply to the first stream (82) is fed via the water supply line (114).

6. A process according to any preceding claim, characterised in that the reaction to produce the hydrosulfite is carried out at a pH in the range 5.5 - 6.5.

7. A process according to any preceding claim, characterised in that the reaction to produce the hydrosulfite is carried out a temperature below 12°C.

8. A process according to any preceding claim, characterised in that the concentrations of the reactants in the circulating reaction mixture are adjusted to give a concentration of hydrosulfite at a draw-off point of 9 - 12 wt.-%.

9. A process according to any preceding claim, characterised in that the reactants are fed into the reactant stream through nozzles (182) positioned centrally in the reactant stream and aligned in the direction of flow, whereby each reactants joins the stream at approximately the prevailing speed of flow.

10. A process according to any preceding claim, characterised in that the sodium borohydride mixture comprises 10 - 15 wt.-% $NaBH_4$, 35 - 45 wt.-% NaOH and 40 - 60 wt.-% water.

11. A process according to any preceding claim, characterised in that the reactants other than the sodium borohydride mixture are fed to the first stream (82) in the form of an aqueous mixture of sodium bisulfite and sulfur dioxide.

12. A process according to any preceding claim, wherein the first stream (82) comprises 20 - 60 % of the recirculating flow and the second stream (84) comprises 40 - 80 % of the flow.

13. Apparatus for the production of sodium hydrosulfite comprising a recycling loop including a static mixer (18), a degassing tank (19) downstream of the static mixer, a circulating pump (24) and a draw-off point for sodium hydrosulfite, characterised in that downstream of the draw-off point the recycling loop is divided into first and second flow lines (82, 84), the first flow line (82) having one or more input points (100, 104) for sodium

hydroxide, sulfur dioxide and water or mixtures or reaction products thereof, the second flow line (84) rejoining the first (82) at a position (86) downstream of said input points and an input point for a sodium borohydride/sodium hydroxide/water mixture being provided downstream of the position (86) at which the first and second flow lines rejoin.

14. Apparatus according to claim 13, characterised in that the input point for the sodium borohydride mixture is positioned to feed the mixture directly to the static mixer.

15. Apparatus according to claim 13 or claim 14, characterised in that the or each input point (100, 104) in the first flow line (82) comprises a nozzle (182) positioned centrally in the flow line and aligned in the direction of flow.

16. Apparatus according to any one of claims 13 to 15, characterised in that the first flow line (82) has an input point (100) for sodium hydroxide and, downstream thereof, an input point (104) for a sulfur dioxide/water mixture.

17. Apparatus according to claim 16, characterised in that a bypass line (101) including a valve (103) is arranged to feed a proportion of the sodium hydroxide input to a water supply line (114) leading to the sulfur dioxide input point (104), a sulfur dioxide supply line being arranged to feed the sulfur dioxide into the water supply line at a position (102) upstream of the input of sodium hydroxide to the water supply line.

## Patentansprüche

1. Verfahren zur Herstellung von Natriumdithionit durch Umsetzung von Natriumborhydrid mit Natriumbisulfit, Natriumhydroxid und Schwefeldioxid in wässriger Lösung, wobei die Reaktionspartner in ein kontinuierlich rezirkulierendes Reaktionsgemisch eingespeist werden, aus welchem eine Natriumdithionitlösung abgezogen wird, und wobei das Natriumborhydrid in das System in der Form eines wässrigen Gemisches mit Natriumhydroxid an einer Stelle abstromwärts von dem Eingang (102, 104) der anderen Reaktionspartner und aufstromwärts von der Stelle, an welcher das Natriumdithionit abgezogen wird, eingespeist wird, dadurch gekennzeichnet, daß an einer Stelle (80) abstromwärts von der Stelle, an welcher das Dithionit abgezogen wird, und aufstromwärts von dem Eingang der Reaktionspartner das zirkulierende Reaktionsgemisch in erste und zweite Ströme (82, 84) geteilt wird, die von dem wässrigen Natriumborhydridgemisch verschiedenen Reaktionspartner in den ersten Strom (82) eingespeist werden und die ersten und zweiten Ströme dann unter Bildung eines einzigen Stromes, in welchen das Natriumborhydridgemisch eingespeist wird, vereinigt (86) werden.

2. Verfahren nach Anspruch 1, dadurch gekennzeichnet, daß Natriumhydroxid in den ersten Strom (82) eingespeist wird und wenigstens ein Teil von ihm in den Strom an einer Stelle (100) aufstromwärts von dem Eingang der anderen Reaktionspartner eintritt.

3. Verfahren nach Anspruch 1 oder Anspruch 2, dadurch gekennzeichnet, daß Schwefeldioxid in eine Wasserzuführleitung (114) eingespeist wird, die in den ersten Strom (82) führt.

4. Verfahren nach Anspruch 3, dadurch gekennzeichnet, daß ein Teil des Natriumhydroxids in den ersten Strom (82) an einer Stelle (100) aufstromwärts von der Stelle (104), an welcher das Schwefeldioxid/Wasser-Gemisch in das System eintritt, eingespeist wird und der Rest in die Wasserzuführleitung (114) eingeführt und darin mit dem Schwefeldioxid/Wasser-Gemisch vermischt wird.

5. Verfahren nach Anspruch 4, dadurch gekennzeichnet, daß 10 bis 50 % der gesamten Natriumhydroxidzufuhr zu dem ersten Strom (82) über die Wasserzuführleitung (114) eingespeist werden.

6. Verfahren nach einem der vorausgehenden Ansprüche, dadurch gekennzeichnet, daß die Umsetzung zur Herstellung des Dithionits bei einem pH im Bereich von 5,5 bis 6,5 durchgeführt wird.

7. Verfahren nach einem der vorausgehenden Ansprüche, dadurch gekennzeichnet, daß die Umsetzung zur Herstellung des Dithionits bei einer Temperatur unterhalb 12°C durchgeführt wird.

8. Verfahren nach einem der vorausgehenden Ansprüche, dadurch gekennzeichnet, daß die Konzentrationen der Reaktionspartner in dem zirkulierenden Reaktionsgemisch so eingestellt werden, daß sie eine Dithionitkonzentration am Abzugspunkt von 9 bis 12 Gew.-% ergeben.

9. Verfahren nach einem der vorausgehenden Ansprüche, dadurch gekennzeichnet, daß die Reaktionspartner in den Reaktionspartnerstrom durch Düsen (182) eingespeist werden, die mittig in dem Reaktionspartnerstrom angeordnet und in der Strömungsrichtung ausgerichtet sind, wobei jeder Reaktionspartner sich mit dem Strom etwa mit der herrschenden Fließgeschwindigkeit vereinigt.

10. Verfahren nach einem der vorausgehenden Ansprüche, dadurch gekennzeichnet, daß das Natriumborhydridgemisch 10 bis 15 Gew.-% $NaBH_4$, 35 bis 45 Gew.-% NaOH und 40 bis 60 Gew.-% Wasser umfaßt.

11. Verfahren nach einem der vorausgehenden Ansprüche, dadurch gekennzeichnet, daß die von dem Natriumborhydridgemisch verschiedenen Reaktionspartner in den ersten Strom (82) in der Form eines wässrigen Gemisches von Natriumbisulfit und Schwefeldioxid eingespeist werden.

12. Verfahren nach einem der vorausgehenden Ansprüche, bei dem der erste Strom (82) 20 bis 60 % des rezirkulierenden Flusses umfaßt und der zweite Strom (84) 40 bis 80 % des Flusses umfaßt.

13. Vorrichtung zur Herstellung von Natriumdithionit mit einer Recyclisierschleife, die einen ortsfesten Mischer (18), einen Entgasungbehälter (19) abstromwärts von dem ortsfesten Mischer, eine Zirkulierpumpe (24) und einen Abzugspunkt für Natriumdithionit einschließt, dadurch gekennzeichnet, daß abstromwärts von dem

Abzugspunkt die Recyclisierschleife in erste und zweite Strömungsleitungen (82, 84) geteilt ist, die erste Strömungsleitung (82) einen oder mehrere Eingangspunkte (100, 104) für Natriumhydroxid, Schwefeldioxid und Wasser oder Gemische oder Reaktionsprodukte hiervon hat, die zweite Strömungsleitung (84) sich mit der ersten (82) an einer Stelle (86) abstromwärts von den Eingangspunkten vereinigt und ein Eingangspunkt für ein Natriumborhydrid/Natriumhydroxid/Wasser-Gemisch abstromwärts von der Stelle (86) vorgesehen ist, an welcher die ersten und zweiten Strömungsleitungen sich vereinigen.

14. Vorrichtung nach Anspruch 13, dadurch gekennzeichnet, daß der Eingangspunkt für das Natriumborhydridgemisch so angeordnet ist, daß das Gemisch direkt in den ortsfesten Mischer eingespeist wird.

15. Vorrichtung nach Anspruch 13 oder Anspruch 14, dadurch gekennzeichnet, daß der oder jeder Eingangspunkt (100, 104) in der ersten Strömungsleitung (82) eine Düse (182) aufweist, die mittig in der Strömungsleitung angeordnet und in der Strömungsrichtung ausgerichtet ist.

16. Vorrichtung nach einem der Ansprüche 13 bis 15, dadurch gekennzeichnet, daß die erste Strömungsleitung (82) einen Eingangspunkt (100) für Natriumhydroxid und, abstromwärts hiervon, einen Eingangspunkt (104) für Schwefeldioxid/Wasser-Gemisch hat.

17. Vorrichtung nach Anspruch 16, dadurch gekennzeichnet, daß eine Bypassleitung (101) mit einem Ventil (103) so angeordnet ist, daß ein Teil der Natriumhydroxideingangsmenge in eine Wasserzuführungsleitung (114) eingespeist wird, die zu dem Schwefeldioxideingangspunkt (104) führt, wobei eine Schwefeldioxidzuführungsleitung so angeordnet ist, daß sie das Schwefeldioxid in die Wasserzuführungsleitung an einer Stelle (102) aufstromwärts von dem Eingang des Natriumhydroxids in die Wasserzuführungsleitung einspeist.

## Revendications

1. Procédé pour produire l'hydrosulfite de sodium en faisant réagir du borohydrure de sodium avec du bisulfite de sodium, de l'hydroxyde de sodium et du dioxyde de soufre en solution aqueuse, suivant lequel les réactants sont admis dans un mélange de réaction en recirculation continue sur lequel une solution d'hydrosulfite de sodium est prélevée et suivant lequel le borohydrure de sodium est admis au système sous la forme d'un mélange aqueux avec de l'hydroxyde de sodium, en un endroit à l'aval de l'entrée (102, 104) des autres réactants et à l'amont de l'endroit auquel l'hydrosulfite de sodium est prélevé, caractérisé en ce qu'en un endroit (80) à l'aval de l'endroit auquel l'hydrosulfite de sodium est prélevé et à l'amont de l'entrée des réactants, le mélange de réaction circulant est divisé en des premier et second courants (82, 84), les réactants autres que le mélange aqueux de borohydrure de sodium étant admis dans le premier courant (82) et les premier et second courants étant ensuite réunis (86) pour former un courant unique dans lequel le mélange de borohydrure de sodium est admis.

2. Procédé suivant la revendication 1, caractérisé en ce que de l'hydroxyde de sodium est admis au premier courant (82) et au moins une partie de l'hydroxyde de sodium entre dans le courant en un endroit (100) à l'amont de l'entrée des autres réactants.

3. Procédé suivant la revendication 1 ou 2, caractérisé en ce que le dioxyde de soufre est admis dans une conduite d'apport d'eau (114) qui mène au premier courant (82).

4. Procédé suivant la revendication 3, caractérisé en ce qu'une partie de l'hydroxyde de sodium est admise au premier courant (82) en un endroit (100) à l'amont de l'endroit (104) auquel le mélange dioxyde de soufre/eau entre dans le système et le reste est admis dans la conduite d'apport d'eau (114) et est mélangé avec le mélange dioxyde de soufre/eau dans la conduite.

5. Procédé suivant la revendication 4, caractérisé en ce que 10 à 50 % de l'apport total d'hydroxyde de sodium au premier courant (82) sont admis par la conduite d'apport d'eau (114).

6. Procédé suivant l'une quelconque des revendications précédentes, caractérisé en ce que la réaction pour produire l'hydrosulfite est exécutée à un pH de l'intervalle de 5,5 à 6,5.

7. Procédé suivant l'une quelconque des revendications précédentes, caractérisé en ce que la réaction pour produire l'hydrosulfite est exécutée à une température inférieure à 12° C.

8. Procédé suivant l'une quelconque des revendications précédentes, caractérisé en ce que les concentrations des réactants dans le mélange de réaction circulant sont ajustées pour établir une concentration d'hydrosulfite de 9 à 12 % en poids à un point de prélèvement.

9. Procédé suivant l'une quelconque des revendications précédentes, caractérisé en ce que les réactants sont admis dans le courant de réactants par des becs (182) disposés centralement dans le courant de réactants et alignés dans la direction d'écoulement, de façon que chaque réactant se joigne au courant à peu près à la vitesse d'écoulement qui règne.

10. Procédé suivant l'une quelconque des revendications précédentes, caractérisé en ce que le mélange de borohydrure de sodium comprend 10 à 15 % en poids de $NaBH_4$, 35 à 45 % en poids de NaOH et 40 à 60 % en poids d'eau.

11. Procédé suivant l'une quelconque des revendications précédentes, caractérisé en ce que les réactants autres que le mélange de borohydrure de sodium sont admis au premier courant (82) sous la forme d'un mélange aqueux de bisulfite de sodium et de dioxyde de soufre.

12. Procédé suivant l'une quelconque des revendications précédentes, dans lequel le premier courant (82) comprend 20 - 60 % de l'écoulement en recirculation et le second courant (84) comprend 40 - 80 % de l'écoulement.

13. Appareil pour la production d'hydrosulfite de sodium, comprenant une boucle de recyclage comportant un mélangeur statique (18), une cuve de dégazage (19) à l'aval du mélangeur statique, une pompe de circulation (24) et un point de prélèvement pour l'hydrosulfite de sodium, caractérisé en ce qu'à l'aval du point de prélèvement, la boucle de recyclage est divisée en des première et seconde conduites d'écoulement (82, 84), la première conduite d'écoulement (82) comprenant un ou plusieurs points d'entrée (100, 104) pour de l'hydroxyde de sodium, du dioxyde de soufre et de l'eau ou des mélanges ou produits de réaction de ceux-ci; la seconde conduite d'écoulement (84) rejoignant la première (82) en un endroit (86) à l'aval de ces points d'entrée, et un point d'entrée pour un mélange borohydrure de sodium/hydroxyde de sodium/eau étant prévu à l'aval de l'endroit (86) auquel les première et seconde conduites se rejoignent.

14. Appareil suivant la revendication 13, caractérisé en ce que le point d'entrée pour le mélange de borohydrure de sodium est positionné pour admettre le mélange directement dans le mélangeur statique.

15. Appareil suivant la revendication 13 ou 14, caractérisé en ce que le ou chaque point d'entrée (100,104) dans la première conduite d'écoulement (82) comprend un bec (182) positionné centralement dans la conduite d'écoulement et aligné dans la direction d'écoulement.

16. Appareil suivant l'une quelconque des revendications 13 à 15, caractérisé en ce que la première conduite d'écoulement (82) comprend un point d'entrée (100) pour de l'hydroxyde de sodium et, à l'aval de celui-ci, un point d'entrée (104) pour un mélange dioxyde de soufre/eau.

17. Appareil suivant la revendication 16, caractérisé en ce qu'une conduite de dérivation (101) comprenant une valve (103) est agencée pour admettre une proportion de l'hydroxyde de sodium admis dans une conduite d'apport d'eau (114) menant au point d'entrée du dioxyde de soufre (104), une conduite d'apport de dioxyde de soufre étant agencée pour admettre le dioxyde de soufre dans la conduite d'apport d'eau en un endroit (102) à l'amont de l'entrée de l'hydroxyde de sodium dans la conduite d'apport d'eau.

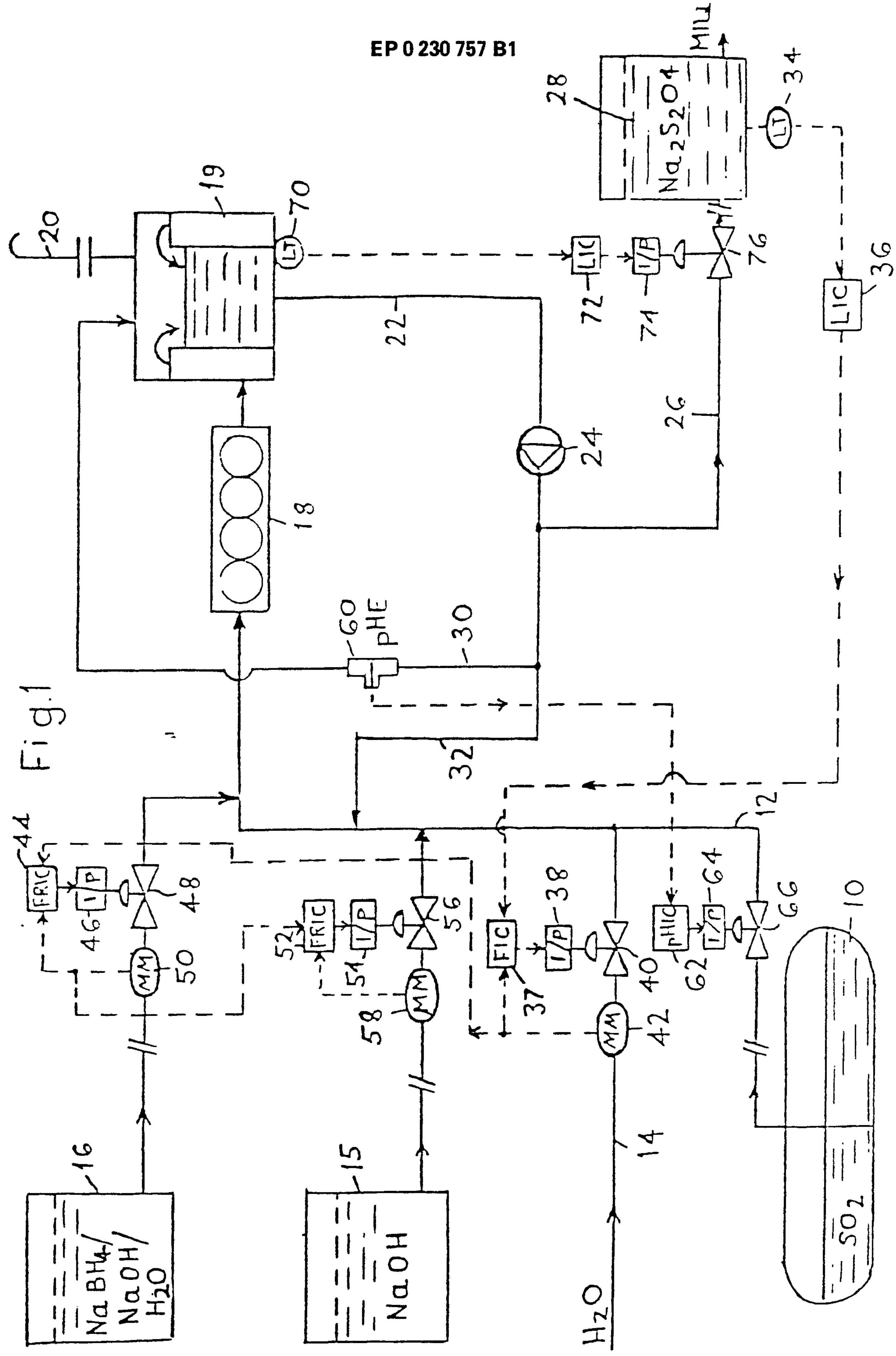
Fig.1
NaBH4/NaOH/H2O
NaOH
H2O
SO2
Na2S2O4
MILL
FRIC
I/P
MM
FIC
pHIC
LIC
LT
pHE
10
12
14
15
16
18
19
20
22
24
26
28
30
32
34
36
37
38
40
42
44
46
48
50
52
54
56
58
60
62
64
66
70
71
72
76

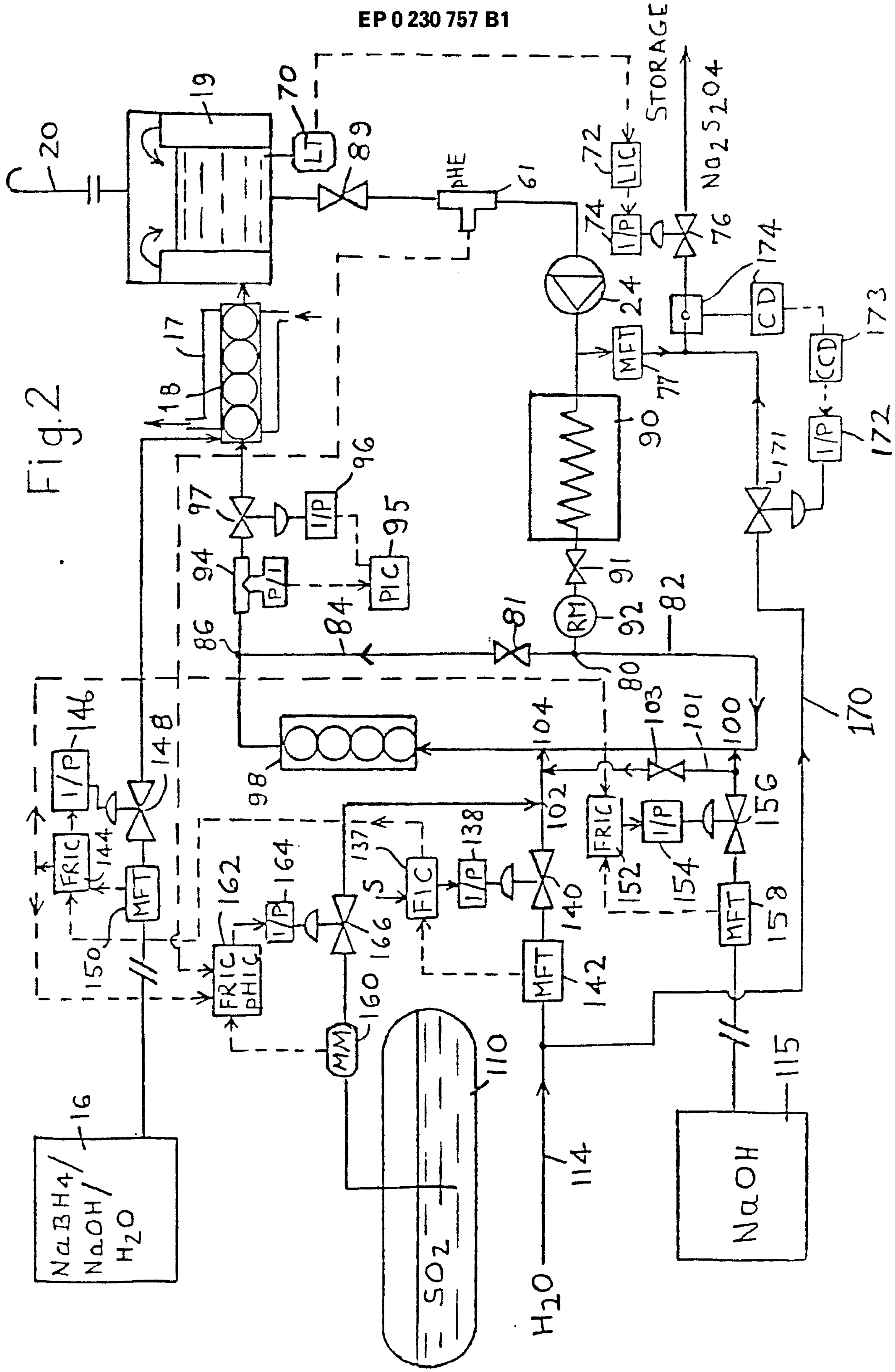

NaBH4/NaOH/H2O
16
SO2
110
H2O
114
NaOH
115
STORAGE
Na2S2O4
MFT
FRIC
I/P
FIC
FRIC pHIC
MM
LT
LIC
pHE
P/I
PIC
RM
CD
CCD
17
18
19
20
24
61
70
72
74
76
77
80
81
82
84
86
89
90
91
92
94
95
96
97
98
100
101
102
103
104
137
138
140
142
144
146
148
150
152
154
156
158
160
162
164
166
170
171
172
173
174


Fig.2

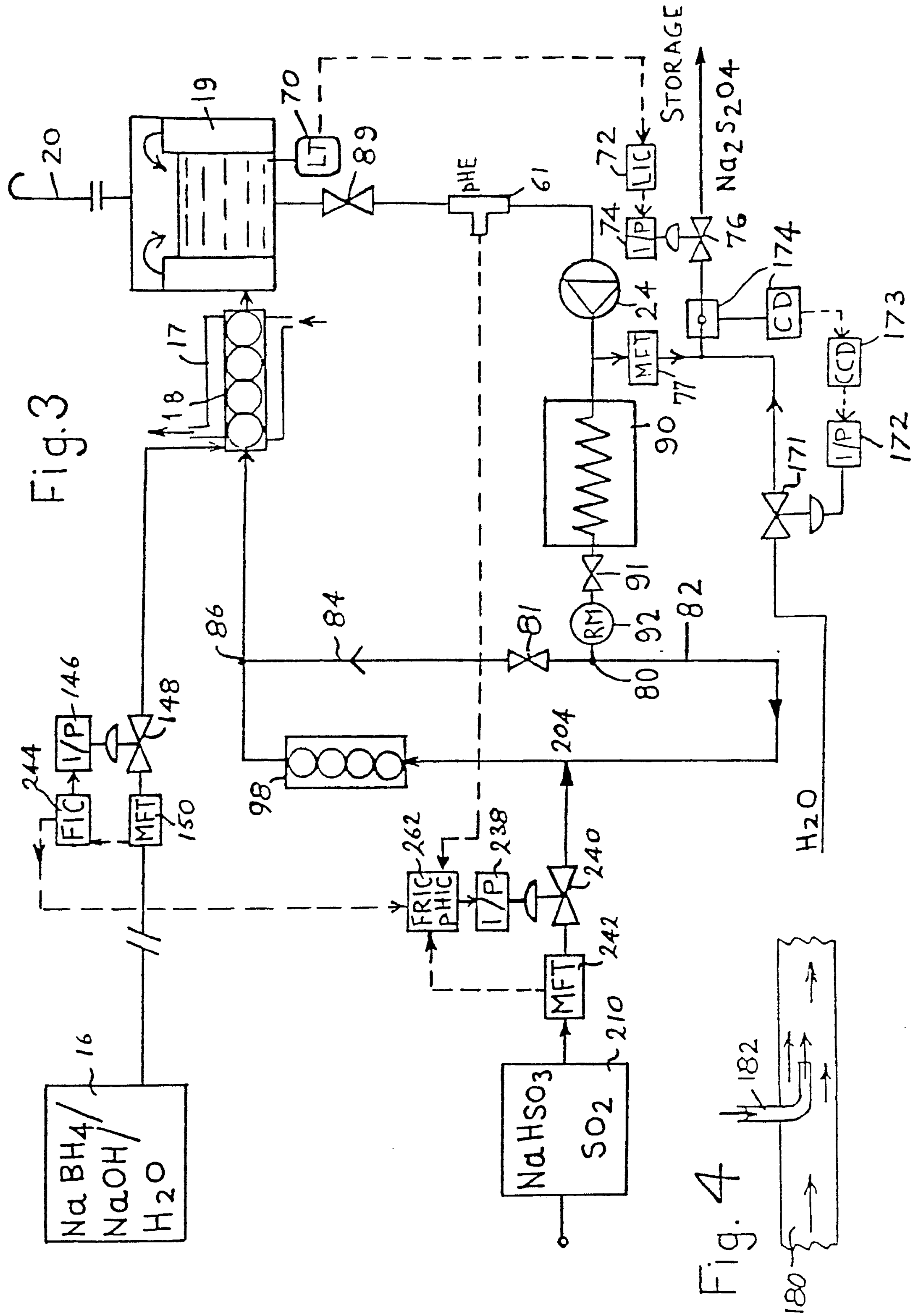
Fig.3
Na BH4/NaOH/H2O
16
NaHSO3
SO2
210
MFT
242
240
238
I/P
FRIC
pHIC
262
204
98
MFT
150
FIC
244
I/P
146
148
86
84
81
80
82
RM
92
91
90
77
MFT
24
pHE
61
89
LT
70
19
20
17
18
LIC
72
I/P
74
76
174
CD
173
CCD
172
I/P
171
Na2S2O4
STORAGE
H2O
Fig. 4
182
180

Fig. 5

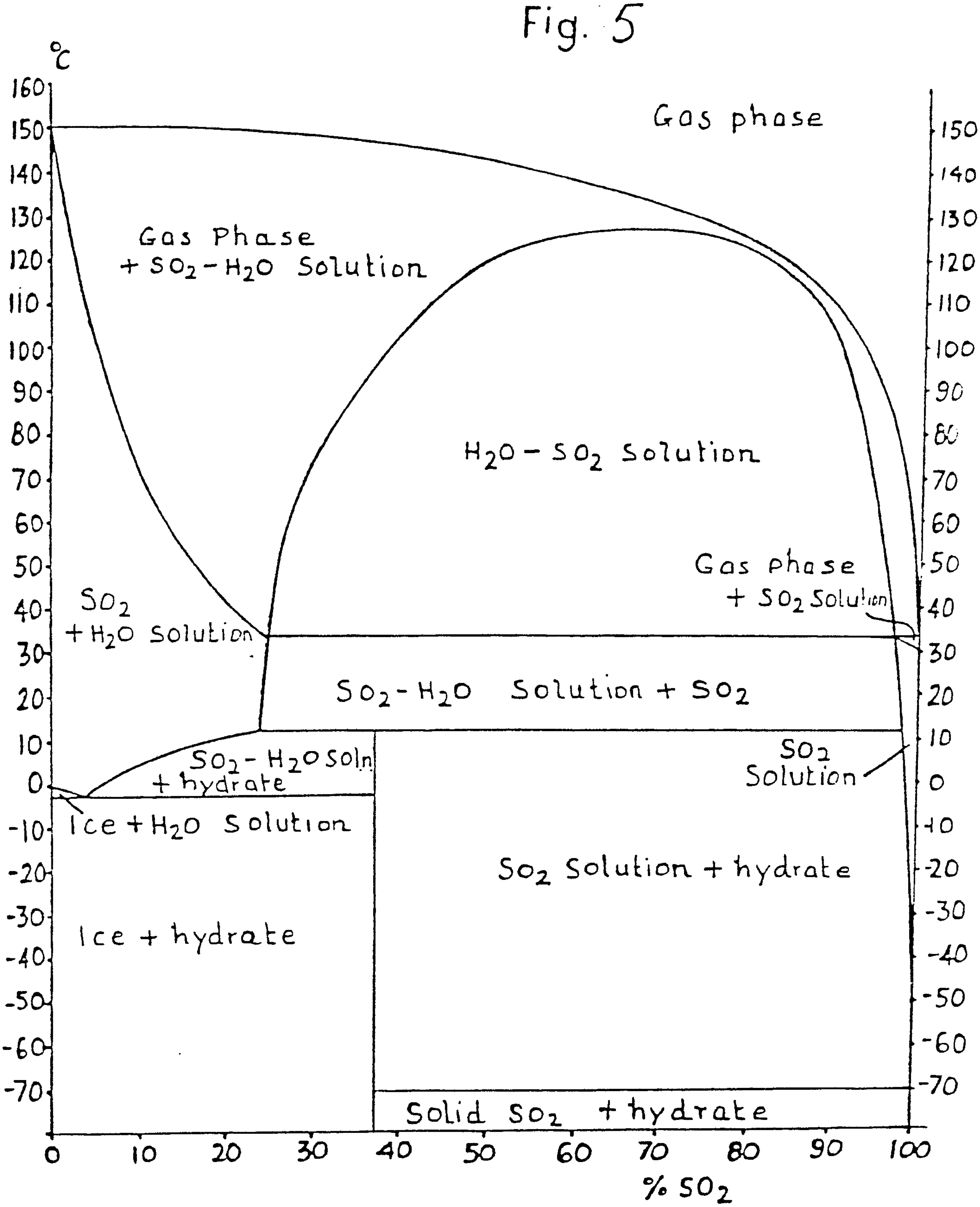
°C
160
150
140
130
120
110
100
90
80
70
60
50
40
30
20
10
0
-10
-20
-30
-40
-50
-60
-70
Gas phase
Gas Phase
+ $SO_2-H_2O$ Solution
$H_2O-SO_2$ Solution
Gas phase
+ $SO_2$ Solution
$SO_2$
+ $H_2O$ Solution
$SO_2-H_2O$ Solution + $SO_2$
$SO_2-H_2O$ Soln
+ hydrate
$SO_2$
Solution
Ice + $H_2O$ Solution
$SO_2$ Solution + hydrate
Ice + hydrate
Solid $SO_2$ + hydrate
0
10
20
30
40
50
60
70
80
90
100
% $SO_2$